Europäisches Patentamt

European Patent Office

Office européen des brevets

(11) Numéro de publication: **0 214 880 B1**

# FASCICULE DE BREVET EUROPEEN

(45) Date de publication de fascicule du brevet:
13.03.91

(51) Int. Cl.⁵: **C08F 259/08**, C08J 7/18

(21) Numéro de dépôt: 86401576.3

(22) Date de dépôt: **15.07.86**

(54) **Procédé de fabrication de copolymères de polyfluorure de vinylidène greffé et membrane en copolymère de polyfluorure de vinylidène obtenue par ce procédé.**

(30) Priorité: **18.07.85 FR 8511010**

(43) Date de publication de la demande:
**18.03.87 Bulletin 87/12**

(45) Mention de la délivrance du brevet:
**13.03.91 Bulletin 91/11**

(84) Etats contractants désignés:
**BE DE GB IT NL SE**

(56) Documents cités:
FR-A- 1 249 009
FR-A- 2 499 594
GB-A- 2 088 883
US-A- 4 129 617

(73) Titulaire: **COMMISSARIAT A L'ENERGIE ATO-MIQUE**
**29-31, rue de la Fédération**
**F-75015 Paris(FR)**

(72) Inventeur: **Darnez, Charles**
**30, rue Pierre Curie**
**F-33200 Bordeaux-Cauderan(FR)**
Inventeur: **Delpuech, Alain**
**Résidence Rosiers-Bellevue Appt. 3159**
**F-33170 Gradignan(FR)**
Inventeur: **Martinet, Jean-Marie Le Jalbron 2**
**Escalier B Rue du Général Pau**
**F-26200 Montélimar(FR)**

(74) Mandataire: **Mongrédien, André et al**
**c/o BREVATOME 25, rue de Ponthieu**
**F-75008 Paris(FR)**

## Description

La présente invention a pour objet un procédé de fabrication de copolymères greffés de polyfluorure de vinylidène, utilisables notamment comme membrane conductrice de l'électricité présentant une bonne tenue mécanique et une conductivité très satisfaisante dans les milieux acides ou basiques.

De telles membranes peuvent être utilisées en particulier pour des réactions d'oxydoréduction électrochimique en milieu acide ou encore comme membranes échangeuses d'ions par introduction de groupes fonctionnels tels que des groupes ammonium quaternaire ou des groupes sulfoniques. Par ailleurs, en raison de leur permsélectivité convenable, l'emploi de ces membranes peut être également étendu aux procédés de séparation faisant appel à des phénomènes tels que l'osmose inverse.

De façon plus précise, elle concerne l'obtention de telles membranes par greffage au moyen de rayonnements ionisants.

Les documents FR-A- 2 499 594 et GB-A-2 088 883 illustrent la réalisation de membranes échangeuses des cations par greffage d'acide fluorovinylsulfonique monomère sur un substrat polymérique membraneux qui peut être fluoré.

Le document FR-A- 1 249 009 décrit la préparation de nombreux copolymères fluorés par greffage qui ne sont pas spécialement destinés à être utilisés comme membrane conductrice de l'électricité.

Le brevet français FR-A-2 476 657 illustre la fabrication de copolymères greffés à base de polyfluorure de vinylidène qui peuvent être utilisés également comme membranes présentant une bonne tenue mécanique et une conductivité satisfaisante dans les milieux acides ou basiques.

Selon ce brevet, on greffe sur un squelette de polyfluorure de vinylidène préalablement irradié au moyen de rayonnements ionisants, une chaîne issue d'un monomère choisi parmi les monomères à caractère basique et les monomères à caractère amphotère. On peut obtenir de tels copolymères sous la forme de membranes ayant une épaisseur de 25 $\mu$m, qui présentent des résistances électriques variant de 1,4 $\Omega$.cm$^2$ à 15 ou 16 $\Omega$.cm$^2$. Bien que de telles propriétés électriques soient satisfaisantes, le procédé décrit dans ce brevet présente l'inconvénient d'exiger l'emploi de doses d'irradiation importantes supérieures à 3 kGy (0,3 Mrad) et de nécessiter l'emploi de températures supérieures à la température ambiante lors de l'étape de greffage (50 à 80°C). Par ailleurs, il ne peut être mis en oeuvre pour l'obtention de membranes de 50 à 100 $\mu$m d'épaisseur, présentant des propriétés électriques satisfaisantes. Ces limitations résultent en particulier de la très mauvaise perméabilité du polyfluorure de vinylidène à l'oxygène, empêchant la diffusion à coeur de ce dernier pendant la phase de radioperoxydation.

La présente invention a précisément pour objet un procédé de fabrication de copolymères greffés de polyfluorure de vinylidène qui pallie les inconvénients précités.

Le procédé, selon l'invention, de fabrication de copolymères de polyfluorure de vinylidène par greffage d'un monomère sur le polyfluorure de vinylidène au moyen de rayonnements ionisants, se caractérise en ce qu'il comprend les étapes successives suivantes:

a) - immerger une poudre ou un film de polyfluorure de vinylidène dans une solution d'un monomère choisi dans le groupe comprenant l'acrylamide, le styrène, le méthylstyrène, l'allylglycidyl éther, la vinyl-2 pyridine, la vinyl-4 pyridine, la méthyl-2 vinyl-5 pyridine, les acrylate et méthacrylate de diméthylaminoéthyle, les acrylate et méthacrylate de diméthylaminopropyle, les acrylate et méthacrylate de diéthylaminoéthyle, les acrylate et méthacrylate de diéthylaminopropyle, la diméthylaminopropyl méthacrylamide, la N-vinyl pyrrolidone, la N-vinyl caprolactone, les acyloxy et hydroxystyrènes, l'acide vinyl sulfonique l'acide acrylique et l'acide méthacrylique, pour imprégner dudit monomère la poudre ou le film de polyfluorure de vinylène,

b) - irradier la poudre ou le film imprégné au moyen de rayonnements ionisants, en l'absence d'oxygène, de sorte que la dose d'irradiation intégrée appliquée soit de 500 Gy à 10 kGy (50 krad à 1 Mrad), et lorsque le monomère greffé n'a pas de caractère ionique,

c)- soumettre ensuite le copolymère greffé obtenu à une réaction chimique pour lui conférer un caractère ionique.

Dans certains cas, le procédé comprend de plus une étape consistant à séparer de la solution la poudre ou le film de polyfluorure de vinylidène imprégné avant de réaliser l'étape b) d'irradiation.

Dans de nombreux cas, cette étape de séparation n'est pas nécessaire et ceci simplifie le mode opératoire. Par ailleurs, il peut être avantageux d'irradier le polymère à l'état gonflé en présence d'un excès de monomère. Il est alors possible de bénéficier à la fois des propriétés de transfert d'énergie radiative offertes par le solvant ainsi que de la faculté accrue d'accès de monomère frais vers les sites réactifs créés sur le polymère support en cours d'irradiation.

Selon une variante de l'invention, le procédé de fabrication de copolymère de polyfluorure de vinylidène greffé au moyen de rayonnements ionisants comprend les étapes successives suivantes :

a) - préparer une solution dans un solvant de polyfluorure de vinylidène ou de copolymère de fluorure de vinylidène contenant au moins 95% de fluorure de vinylidène, et d'un monomère choisi dans le groupe comprenant l'acrylamide, le styrène, le méthylstyrène, l'allylglycidyl éther, la vinyl-2 pyridine, la vinyl-4 pyridine, la méthyl-2 vinyl-5 pyridine, les acrylate et méthacrylate de diméthylaminoéthyle, les acrylate et méthacrylate de diméthylaminopropyle, les acrylate et méthacrylate de diéthylaminoéthyle, les acrylate et méthacrylate de diéthylaminopropyle, la diméthylaminopropyl méthacrylamide, la N-vinyl pyrrolidone, la N-vinyl caprolactone, les acyloxy et hydroxystyrènes, l'acide vinyl sulfo-nique l'acide acrylique et l'aci-de méthacrylique,

b) - irradier la solution obtenue, en l'absence d'oxygène, de sorte que la dose d'irradiation intégrée appliquée soit de 500 Gy à 10 kGy (50 krad à 1 Mrad),

c) - former un film de copolymère greffé à partir de la solution irradiée par évaporation du solvant et par élimination de l'homopolymère formé et du monomère résiduel, et

d) - soumettre ensuite le film en copolymère greffé obtenu à une réaction chimique pour lui conférer un caractère ionique lorsque le monomère greffé n'a pas de caractère ionique.

Cette derniére variante est basée, d'une part, sur une bonne compatibilité entre le polyfluorure de vinylidène et le monomère de greffage et, d'autre part, sur la différence aussi élevée que possible entre les tensions de vapeur du monomère et du solvant utilisés. Cette dernière variante est plus particulièrement indiquée lorsque le polyfluorure de vinylidène se présente sous forme pulvérulente.

Selon une autre variante de l'invention, le procédé de fabrication de copolymères de polyfluorure de vinylidène par greffage d'un monomère sur le polyfluorure de vinylidène au moyen de rayonnements ionisants, se caractérise en ce qu'il comprend les étapes successives suivantes :

a) préparer une solution dans un solvant de polyfluorure de vinylidène ou de copolymère de fluorure de vinylidène contenant au moins 95% de fluorure de vinylidène, et d'un monomère choisi dans le groupe comprenant l'acrylamide, le styrène, le méthytstyrène, l'allylglycidyl éther, la vinyl-2 pyridine, la vinyl-4 pyridine, la méthyl-2 vinyl-5 pyridine, les acrylate et méthacrylate de diméthylaminoéthyle, les acrylate et méthacrylate de diméthylaminopropyle, les acrylate et méthacrylate de diéthylaminoéthyte, les acrylate et méthacrylate de diéthylaminopropyle, la diméthylaminopropyl méthacrylamide, la N-vinyl pyrrolidone, la N-vinyl caprolactone, les acyloxy et hydroxystyrènes, l'acide vinyl sulfonique, l'acide acrylique et l'acide méthacrylique,

b) former un film à partir de la solution par évaporation du solvant,

c) irradier le film ainsi obtenu au moyen de rayonnements ionisants, en l'absence d'oxygène, de sorte que la dose d'irradiation intégrée appliquée soit de 500 Gy à 10 kGy (50 krad à 1 Mrad), et

d) soumettre ensuite le film en copolymère greffé obtenu à une réaction chimique pour lui conférer un caractère ionique lorsque le monomère greffé n'a pas de caractère ionique.

Les monomères utilisés dans l'invention permettent d'améliorer la conductivité électrique du polyfluorure de vinylidène.

Parmi ceux-ci, on peut utiliser des monomères possédant des groupements anioniques et/ou cationiques qui leur confèrent un caractère ionique, comme c'est le cas par exemple des acides acrylique et méthacrylique. Avec ces monomères, il n'est donc pasnécessaire de réaliser une réaction complémentaire pour donner un caractère ionique ou copolymère. En revanche, avec d'autres monomères on réalise cette réaction afin de fixer des groupements anioniques ou cationiques à l'aide d'un traitement chimique adapté ; c'est le cas du styrène qui peut être sulfoné.

Il est en outre envisageable selon le présent procédé de fixer plus d'un monomère sur le même film de départ, soit simultanément, soit en plusieurs opérations successives. On peut ainsi préparer des membranes à caractère amphotère.

De même, l'ajout concomitant de monomères possédant plusieurs groupements insaturés permet d'assurer une réticulation partielle du matériau final afin d'en améliorer la résistance mécanique. On peut employer, par exemple à cet effet, le divinylbenzène, le cyanurate de triallyle,...

Les polyfluorures de vinylidène utilisés dans l'invention sont des produits préparés par les méthodes classiques de polymérisation du fluorure de vinylidène. On précise que par le terme de "polyfluorure de vinylidène" on entend également les copolymères de fluorure de vinylidène comportant au moins 95% de fluorure de vinylidène.

Pour la mise en oeuvre du procédé de l'invention, l'étape a) d'imprégnation de la poudre ou du film de polyfluorure de vinylidène peut être réalisée la température ambiante, pendant une durée d'au moins 24 heures, ce qui conduit à un bon taux d'imprégnation du polymère par le monomère. Cette imprégnation peut être accélérée, le cas échéant, par une légère élévation de température.

Pour préparer la solution d'imprégnation, on dissout le monomère dans de l'eau ou dans un solvant organique constitué par exemple par un ester tel que l'acétate d'éthyle ou de butyle, un éther tel que le tétrahydrofuranne, un alcool tel que le méthanol, une cétone telle que l'acétone ou une amine telle que la diméthylamine, un amide tel que le diméthylacétamide et le diméthylformamide ou du diméthylsulfoxyde. On peut aussi utiliser des mélanges de solvants, par exemple un mélange d'eau et de diméthylformamide et éventuellement ajouter à ce mélange un hydrocarbure halogéné tel que le tétrachlorure de carbone ou le chloroforme.

Le procédé de l'invention se révèle particulièrement avantageux, car il n'est pas nécessaire d'opérer à température élevée puisque l'on peut réaliser les étapes d'imprégnation et d'irradiation à la température ambiante. Par ailleurs, il présente l'avantage de permettre l'obtention de films ayant des résistivités électriques sensiblement plus faibles et des épaisseurs plus importantes que dans le brevet français FR-A-2 476 657, ce qui conduit à de meilleures propriétés mécaniques. De plus, il ne nécessite pas l'emploi de doses d'irradiation aussi élevées que dans FR-A-2 476 657 et il peut être mis en oeuvre non seulement avec des monomères à caractère basique ou amphotère mais aussi avec des monomères à caractère acide.

Après l'étape d'imprégnation de la poudre ou du film de polyfluorure de vinylidène par le monomère, on peut séparer la poudre ou le film de la solution et on le soumet à une irradiation au moyen de rayonnements ionisants.

Les rayonnements ionisants susceptibles d'être utilisés sont les rayonnements ultraviolets, les rayonnements bêta, les rayonnements γ et les faisceaux d'électrons accélérés. Généralement, on utilise les rayonnements γ provenant d'une source de cobalt 60. Les doses de rayonnements requises pour obtenir un greffage efficace du monomère sur le polyfluorure de vinylidène sont de 50 krad à 1 Mrad.

L'irradiation est réalisée en l'absence d'oxygène, par exemple sous vide ou sous atmosphère de gaz inerte tel que l'azote, l'argon,...

Après irradiation, les poudres greffées peuvent être mises sous la forme de membranes, par exemple par dissolution dans un solvant approprié tel que le diméthylformamide ou le diméthylacétamide, puis évaporation du solvant à une température convenable, en général voisine de 140°C.

Après irradiation du polyfluorure de vinylidène sous la forme de poudre ou sous la forme de film, on peut extraire le monomère n'ayant pas réagi par dissolution dans un solvant approprié tel que l'acétate d'éthyle jusqu'à ce que l'on n'observe plus de variation de masse sur l'échantillon greffé.

Après ces différentes opérations, on effectué si nécessaire une modification chimique du film pour lui conférer un caractère ionique. Cette modification peut être, par exemple une quaternisation lorsque le monomère greffé est un monomère comportant un groupement amine ou une sulfonation dans le cas où le monomère greffé est du styrène, un dérivé du styrène ou l'allylglycidyl éther. La quaternisation peut être réalisée par immersion du film ou de la poudre dans une solution d'acide chlorhydrique 4N. La sulfonation peut être réalisée par réaction des groupes styrène avec de l'acide chlorosulfonique après avoir fait gonfler le copolymère greffé dans du tétrachlorure de carbone ou du dichlorométhane et ajouté éventuellement au dichlorométhane du nitrométhane.

Les membranes peuvent être ensuite séchées afin d'être stockées avant utilisation, mais il est alors nécessaire de les conditionner préalablement à leur emploi. Le conditionnement peut consister en un traitement dans un mélange en parties égales d'un acide environ 10N et d'un solvant non destructeur du copolymère greffé, comme par exemple les éthers, les esters, les alcools ou les cétones contenant de 1 à 8 atomes de carbone dans leur molécule.

Ce traitement s'effectue habituellement à une température allant de la température ambiante à 80°C, pendant une durée de 8 heures au plus.

Le procédé de l'invention s'applique en particulier à la fabrication de membranes en polyfluorure de vinylidène greffé présentant une épaisseur de 50 à 100μm et ayant une résistivité électrique surfacique en milieu NaCl 1N nettement inférieure à 5Ω.cm², de référence inférieure à 2 Ω.cm² par exemple de membranes en polyfluorure de vinylidène greffé par du méthacrylate de diméthylaminoéthyle.

Les exemples 1 à 7 qui suivent, sont donnés bien entendu à titre non limitatif pour illustrer la mise en oeuvre du procédé de l'invention. L'exemple 8 donné à titre comparatif montre que des conditions de greffage différentes de celles utilisées dans l'invention ne permettent pas d'obtenir des membranes suffisamment conductrices de l'électricité.

EXEMPLE 1 : Préparation d'un film de polyfluorure de vinylidène greffé par de l'acide acrylique.

On part d'un film de polyfluorure de vinylidène de 50 μm d'épaisseur et on l'immerge à la température ambiante dans une solution d'acide acrylique ayant la composition volumique suivante :
- acide acrylique
100 parties,

- eau

100 parties,

- diméthylformamide

200 parties.

Après 48 heures d'immersion, on sépare le film de la solution et on l'irradie par les rayonnements γ provenant d'une source de cobalt 60 dans les conditions suivantes :

- débit de dose d'irradiation :

50 krad/h

- dose d'irradiation intégrée :

800 krad

Après irradiation, on rince le film à l'eau et on le traite à l'acétate d'éthyle dans un extracteur Soxlhet pour éliminer le monomère n'ayant pas réagi.

On détermine alors le taux de greffage τ du monomère sur le polymère qui correspond à la formule :

$$\tau = \frac{M - M_0}{M_0} \times 100$$

dans laquelle M représente le poids de la membrane greffée et $M_0$ le poids de la membrane avant greffage.

On trouve ainsi que le taux de greffage est de 22%.

On détermine ensuite la résistivité électrique surfacique de la membrane ainsi obtenue après lavage à l'eau de la membrane, puis équilibrage par trempage à température ambiante dans une solution de NaCl 1N pendant environ 10 heures, en mesurant la résistance électrique dans ce même milieu. On trouve ainsi une résistivité électrique en surface de 16 $\Omega.cm^2$.

EXEMPLE 2 : Préparation d'une membrane en polyfluorure de vinylidène greffé par le méthacrylate de diméthylaminoéthyle.

On part d'un film de polyfluorure de vinylidène de 50 μm d'épaisseur et on l'immerge dans une solution de méthacrylate de diméthylaminoéthyle ayant la composition volumique suivante :

- méthacrylate de diméthylaminoéthyle

100 parties,

- eau

100 parties,

- diméthylformamide

200 parties.

On poursuit l'immersion à la température ambiante pendant 48 heures. On extrait alors le film de la solution et on le soumet à l'action des rayonnements γ provenant d'une source de cobalt 60 dans les conditions suivantes :

- débit de dose :

50 krad/h

- dose intégrée :

800 krad.

Comme précédemment, on rince ensuite le film à l'eau et on le traite à l'acétate d'éthyle dans un extracteur Soxlhet. On observe un taux de greffage de 32%.

On traite ensuite le film pendant 50 heures par une solution aqueuse 4N d'acide chlorhydrique et l'on mesure la résistance électrique qui est de 0,7 $\Omega.cm^2$ dans les mêmes conditions que celles de l'exemple 1.

EXEMPLE 3 : Préparation d'une membrane en polyfluorure de vinylidène greffé par du méthacrylate de diméthylaminoéthyle.

Dans cet exemple, on part d'un film de 100 μm d'épaisseur et on réalise le greffage et l'irradiation dans les mêmes conditions que celles de l'exemple 2.

Dans ces conditions, on obtient un taux de greffage de 34% et une résistivité électrique de la membrane ainsi greffée de 1,7 $\Omega.cm^2$.

Ainsi, on obtient des propriétés électriques satisfaisantes même pour des épaisseurs de films de 100 μm.

EXEMPLE 4 : Préparation d'une membrane en polyfluorure de vinylidène greffé par du méthacrylate de diméthylaminoéthyle.

Dans cet exemple, on part d'un film de 50 μm d'épaisseur. Les conditions opératoires sont identiques à celles observées dans le cas de l'exemple 2, mis à part le temps de gonflement précédant l'irradiation qui est ici de trente jours.

Dans ces conditions, on obtient un taux de greffage égal à 60%. La résistivité surfacique de cette membrane greffée et quaternisée est de 0,25 $cm^2$ : ainsi, pour une épaisseur double de film initial, on atteint une résistivité surfacique presque dix fois inférieure à celle des membranes préparées dans des conditions comparables selon le brevet français FR-A-2 476 657.

EXEMPLE 5 : Préparation d'une membrane en polyfluorure de vinylidène greffée par du styrène.

Dans cet exemple, on part d'un film de 50 μm d'épaisseur, on le plonge pendant 48 heures dans une solution de styrène ayant la composition volumique suivante :

- styrène

100 parties,

- eau

100 parties,

- diméthylformamide

250 parties.

On irradie ensuite le système après désaération par les rayonnements γ provenant d'une source de cobalt 60 dans les conditions suivantes :

- débit de dose : 50 krad/h,

- dose d'irradiation intégrée : 200 krad.

On nettoie ensuite le film avec du méthanol puis on le traite dans un extracteur Soxlhet avec du toluène. Le taux de greffage obtenu est de 46%.

Ce film est ensuite immergé sous agitation pendant 16 heures dans un mélange 1/4 en volume d'acide chlorosulfonique et de tétrachlorure de carbone. La membrane est ensuite lavée à l'eau chaude et conditionnée dans une solution aqueuse de NaCl 1N. La résistivité électrique de surface correspondante est égale à 0,4 $\Omega$ cm$^2$.

Exemple 6 : Préparation d'une membrane de polyfluorure de vinylidène greffée par du styrène.

Dans cet exemple, on introduit 10 grammes de polyfluorure de vinylidène pulvérulent dans une ampoule renfermant une solution de styrène ayant la composition suivante :
- styrène
100 parties
- toluène
100 parties
- eau
100 parties
- diméthylformamide
25 parties.

Après élimination de l'oxygène, le mélange réactionnel est irradié par les rayonnements $\gamma$ d'une source de Cobalt 60 dans les conditions suivantes :
- débit de dose :
10 kGy/h (1 Mrad/h)
- dose absorbée :
5 Gy (500 Krad).

La poudre est alors isolée puis traitée dans un extracteur SOXHLET avec du toluène. On obtient un taux de greffage de 55%.

Le polymère est ensuite dissous dans le diméthylformamide puis déposé sous forme de film par coulée et évaporation du solvant.

Ce film est ensuite sulfoné selon les conditions décrites dans l'exemple 5. Sa résistance électrique surfacique est alors égale à 0,25 $\Omega$.cm$^2$.

Exemple 7 : Préparation d'une membrane en polyfluorure de vinylidène greffée par l'acide méthacrylique.

Dans cet exemple, on part d'un film de polyfluorure de vinylidène de 50 $\mu$m d'épaisseur et on l'immerge dans une solution d'acide acrylique ayant la composition suivante :
- acide méthacrylique
: 100 parties
- eau distillée
: 100 parties
- diméthylformamide
: 200 parties.

L'immersion est poursuivie pendant 48 heures à température ambiante puis le milieu réactionnel est irradié sous vide dans les conditions suivantes :
- débit de dose
: 500 Gy/h (50 Krad/h)

- dose absorbée
: 12 kGy (1,2 Mrad).

Après rinçage du film traité, extraction avec de l'eau distillée et séchage, on obtient un taux de greffage de 31% et une résistance électrique de la membrane ainsi greffée égale à 3,5 $\Omega$ cm$^2$.

Exemple 8 : Préparation d'une membrane en polyfluorure de vinylidène greffée par du méthacrylate de diméthylaminoéthyle.

Dans cet exemple, on part d'un film de polyfluorure de vinylidène de 50 ou 100 $\mu$m d'épaisseur, et on réalise le greffage du méthacrylate de diméthylaminoéthyle en utilisant le procédé du brevet français FR-A-2 476 657, c'est-à-dire en soumettant tout d'abord le film à une irradiation au moyen de rayonnements ionisants et en l'immergeant ensuite dans la solution de greffage.

L'irradiation du film est réalisée dans les conditions suivantes :
- débit de dose :
600 Gy/h (60 Krad/h)
- dose absorbée :
30 kGy (3 Mrad).

Après irradiation, on immerge le film irradié dans la solution de méthacrylate de diméthylaminoéthyle ayant la composition volumique suivante :
- méthacrylate de diméthylaminoéthyle : 100 parties
- eau : 100 parties
- CuSO$_4$, 5H$_2$O : 1%.

On réalise cette immersion à une température de 60°C pendant 6 heures.

Après cette opération, on rince le film à l'eau et on le traite à l'acétate d'éthyle dans un extracteur Soxlhet comme dans les exemples 2 et 3, et on observe un taux de greffage de 8,5% pour le film de 50 $\mu$m d'épaisseur et un taux de greffage de 4% pour le film de 100 $\mu$m d'épaisseur.

On traite ensuite le film pendant 50 heures par une solution aqueuse 4 N d'acide chlorhydrique et l'on mesure la résistance électrique dans les mêmes conditions que celles de l'exemple 1.

La résistance électrique du film est de 45 $\Omega$.cm$^2$ pour le film ayant une épaisseur de 50 $\mu$m et elle est supérieure à 100 $\Omega$ .cm$^2$ pour le film de 100 $\mu$m d'épaisseur.

Si l'on compare ces résultats avec ceux des exemples 2 et 3, on remarque que le procédé de l'invention permet d'obtenir des résistivités électriques très inférieures.

**Revendications**

1. Procédé de fabrication de copolymères de polyfluorure de vinylidène par greffage d'un monomère sur le polyfluorure de vinylidène au moyen de rayonnements ionisants, caractérisé en ce qu'il comprend les étapes successives suivantes :

a) - immerger une poudre ou un film de polyfluorure de vinylidène ou de copolymère de fluorure de vinylidène contenant au moins 95% de fluorure de vinylidène, dans une solution d'un monomère choisi dans le groupe comprenant l'acrylamide, le styrène, le méthylstyrène, l'allylglycidyl éther, la vinyl-2 pyridine, la vinyl-4 pyridine, la méthyl-2 vinyl-5 pyridine, les acrylate et méthacrylate de diméthylaminoéthyle, les acrylate et méthacrylate de diméthytaminopropyle, les acrylate et méthacrylate de diéthylaminoéthyle, les acrylate et méthacrylate de diéthylaminopropy-le, la diméthylaminopropyl métha-crylamide, la N-vinyl pyrrolidone, la N-vinyl caprolactone, les acyloxy et hydroxystyrènes, l'acide vinyl sulfo-nique l'acide acrylique et l'acide méthacrylique pour imprégner dudit monomère la poudre ou le film de polyfluorure de vinylidène,

b) - irradier la poudre ou le film imprégné au moyen de rayonnements ionisants, en l'absence d'oxygène, de sorte que la dose d'irradiation intégrée appliquée soit de 500 Gy à 10 kGy (50 krad à 1 Mrad), et lorsque le monomère greffé n'a pas de caractère ionique,

c) - soumettre ensuite le copolymère greffé obtenu à une réaction chimique pour lui conférer un caractère ionique.

2. Procédé selon la revendication 1, caractérisé en ce que l'on sépare de la solution la poudre ou le film imprégné avant de réaliser l'étape b) d'irradiation.

3. Procédé de fabrication de copolyméres de polyfluorure de vinylidène par greffage d'un monomère sur le polyfluorure de vinylidène au moyen de rayonnements ionisants, caractérisé en ce qu'il comprend les étapes successives suivantes :

a) - préparer une solution dans un solvant de polyfluorure de vinylidène ou de copolymère de fluorure de vinylidène contenant au moins 95% de fluorure de vinylidène, et d'un monomère choisi dans le groupe comprenant l'acrylamide, le styrène, le méthylstyrène, l'allylglycidyl éther, la vinyl-2 pyridine, la vinyl-4 pyridine, la méthyl-2 vinyl-5 pyridine, les acrylate et méthacrylate de diméthylaminoéthyle, les acrylate et méthacrylate de diméthylaminopropyle, les acrylate et méthacrylate de diéthylaminoéthyle, les acrylate et méthacrylate de diéthylaminopropy-le, la diméthylaminopropyl métha-crylamide, la N-vinyl pyrrolidone, la N-vinyl caprolactone, les acyloxy et hydroxystyrènes, l'acide vinyl sulfo-nique l'acide acrylique et l'acide méthacrylique,

b) - irradier la solution obtenue, en l'absence d'oxygène, de sorte que la dose d'irradiation intégrée appliquée soit de 500 Gy à 10 kGy (50 Krad à 1 Mrad).

c) - former un film de copolymère greffé à partir de la solution irradiée par évaporation du solvant et par élimination de l'homopolymère formé et du monomère résiduel, et

d) - soumettre ensuite le film en copolymère greffé obtenu à une réaction chimique pour lui conférer un caractère ionique lorsque le monomère greffé n'a pas de caractère ionique.

4. Procédé de fabrication de copolymères de polyfluorure de vinylidène par greffage d'un monomère sur le polyfluorure de vinylidène au moyen de rayonnements ionisants, caractérisé en ce qu'il comprend les étapes successives suivantes :

a) - préparer une solution dans un solvant de polyfluorure de vinylidène ou de copolymère de fluorure de vinylidéne contenant au moins 95% de fluorure de vinylidène et d'un monomère choisi dans le groupe comprenant l'acrylamide, le styrène, le méthylstyrène, l'allylglycidyl éther, la vinyl-2 pyridine, la vinyl-4 pyridine, la méthyl-2 vinyl-5 pyridine, les acrylate et méthacrylate de diméthylaminoéthyle, les acrylate et méthacrylate de diméthylaminopropyle, les acrylate et méthacrylate de diéthylaminoéthyle, les acrylate et méthacrylate de diéthylaminopropyle, la diméthylaminopropyl méthacrylamide, la N-vinyl pyrrolidone, la N-vinyl caprolactone, les acyloxy et hydroxystyrènes, l'acide vinyl sulfonique l'acide acrylique et l'acide méthacrylique,

b) - former un film à partir de la solution par évaporation du solvant,

c) - irradier le film ainsi obtenu au moyen de rayonnements ionisants, en l'absence d'oxygène, de sorte que la dose d'irradiation intégrée appliquée soit de 500 Gy à 10 kGy (50 krad à 1 Mrad), et

d) - soumettre ensuite le film en copolymère greffé obtenu à une réaction chimique pour lui conférer un caractère ionique lorsque le monomère greffé n'a pas de caractère ionique.

5. Procédé selon l'une quelconque des revendications 1 à 4, caractérisé en ce que la réaction chimique consiste en une quaternisation ou une sulfonation.

6. Procédé selon l'une quelconque des revendications 1 et 2, caractérisé en ce que l'on réalise l'étape a) d'imprégnation de la poudre ou du film de polyfluorure de vinylidène à la température ambiante, pendant une durée d'au moins 24 heures.

7. Procédé selon l'une quelconque des revendications 1, 2 et 6, caractérisé en ce que le monomère est en solution dans un mélange d'eau et d'un solvant organique.

8. Procédé selon la revendication 7, caractérisé en ce que le solvant organique est une cétone ou du diméthylformamide.

9. Membrane en polyfluorure de vinylidène greffé obtenue par mise en oeuvre du procédé selon l'une quelconque des revendications 1 à 8, caractérisée en ce qu'elle présente une épaisseur de 50 à 100 μm et une résistivité électrique surfacique en milieu NaCl 1N nettement inférieure à 5 Ω.cm².

10. Membrane selon la revendication 9, caractérisée en ce qu'elle est réalisée en polyfluorure de vinylidène greffé par du méthacrylate de diméthylaminoéthyle ou par du styrène sulfoné.

## Claims

1. A process for the manufacture of polyvinylidene fluoride copolymers by the grafting of a monomer on to polyvinylidene fluoride by means of ionizing radiation, characterized in that it comprises the following successive steps:

a) - immersing a powder or a film of polyvinylidene fluoride, or of a vinylidene fluoride copolymer containing at least 95% of vinylidene fluoride, in a solution of a monomer selected from the group consisting of acrylamide, styrene, methylstyrene, allyl glycidyl ether, 2-vinylpyridine, 4-vinylpyridine, 2-methyl-5-vinylpyridine, dimethylaminoethyl acrylate and methacrylate, dimethylaminopropyl acrylate and methacrylate, diethylaminoethyl acrylate and methacrylate, diethylaminopropyl acrylate and methacrylate, dimethylaminopropylmethacrylamide, N-vinylpyrrolidone, N-vinylcaprolactone, acyloxy- and hydroxy-styrenes, vinylsulphonic acid, acrylic acid and methacrylic acid, in order to impregnate the powder or the film of polyvinylidene fluoride with said monomer,

b) - irradiating the impregnated powder or film by means of ionizing radiation, in the absence of oxygen, so that the integrated irradiation dose applied is 500 Gy to 10 kGy (50 krad to 1 Mrad), and then, if the grafted monomer has no ionic character,

c) - subjecting the graft copolymer obtained to a chemical reaction in order to give it ionic character.

2. A process according to Claim 1, characterized in that the impregnated powder or film is separated from the solution before the irradiation step b) is carried out.

3. A process for the manufacture of polyvinylidene fluoride copolymers by the grafting of a monomer on to polyvinylidene fluoride by means of ionizing radiation, characterized in that it comprises the following successive steps:

    a) - preparing a solution, in a solvent, of polyvinylidene fluoride, or of a vinylidene fluoride copolymer containing at least 95% of vinylidene fluoride, and of a monomer selected from the group consisting of acrylamide, styrene, methylstyrene, allyl glycidyl ether, 2-vinylpyridine, 4-vinyl-pyridine, 2-methyl-5-vinyl-pyridine, dimethylaminoethyl acrylate and methacrylate, dimethylaminopropyl acrylate and methacrylate, diethylaminoethyl acrylate and methacrylate, diethylaminopropyl acrylate and methacrylate, dimethylaminopropylmethacrylamide, N-vinylpyrrolidone, N-vinylcaprolactone, acyloxyand hydroxy-styrenes, vinylsulphonic acid, acrylic acid and methacrylic acid,

    b) - irradiating the solution obtained, in the absence of oxygen, so that the integrated irradiation dose applied is 500 Gy to 10 kGy (50 krad to 1 Mrad),

    c) - forming a film of graft copolymer from the irradiated solution by evaporation of the solvent and by elimination of the homopolymer formed and the residual monomer, and then

    d) - subjecting the graft copolymer film obtained to a chemical reaction in order to give it ionic character if the grafted monomer has no ionic character.

4. A process for the manufacture of polyvinylidene fluoride copolymers by the grafting of a monomer on to polyvinylidene fluoride by means of ionizing radiation, characterized in that it comprises the following successive steps:

    a) - preparing a solution, in a solvent, of polyvinylidene fluoride, or of a vinylidene fluoride copolymer containing at least 95% of vinylidene fluoride, and of a monomer selected from the group consisting of acrylamide, styrene, methylstyrene, allyl glycidyl ether, 2-vinylpyridine, 4-vinylpyridine, 2-methyl-5-vinyl-pyridine, dimethylaminoethyl acrylate and methacrylate, dimethylaminopropyl acrylate and methacrylate, diethylaminoethyl acrylate and methacrylate diethylaminopropyl acrylate and methacrylate, dimethylaminopropylmethacrylamide, N-vinylpyrrolidone, N-vinylcaprolactone, acyloxy- and hydroxy-styrenes, vinylsulphonic acid, acrylic acid and methacrylic acid,

    b) - forming a film from the solution by evaporation of the solvent,

    c) - irradiating the resulting film by means of ionizing radiation, in the absence of oxygen, so that the integrated irradiation dose applied is 500 Gy to 10 kGy (50 krad to 1 Mrad), and then

    d) - subjecting the graft copolymer film obtained to a chemical reaction in order to give it ionic character if the grafted monomer has no ionic character.

5. A process according to any one of Claims 1 to 4, characterized in that the chemical reaction consists of a quaternization or a sulphonation.

6. A process according to Claim 1 or Claim 2, characterized in that step a) for impregnation of the polyvinylidene fluoride powder or film is carried out at room temperature for a period of at least 24 hours.

7. A process according to any one of Claims 1, 2 and 6, characterized in that the monomer is in solution in a mixture of water and an organic solvent.

8. A process according to Claim 7, characterized in that the organic solvent is a ketone or dimethylformamide.

9. A grafted polyvinylidene fluoride membrane obtained by carrying out the process according to any one of Claims 1 to 8, characterized in that its thickness is 50 to 100 μm and its surface electrical resistivity in a 1 N NaCl medium is appreciably less than 5 Ω.cm².

10. A membrane according to Claim 9, characterized in that it is made of polyvinylidene fluoride on to which dimethylaminoethyl methacrylate or sulphonated styrene has been grafted.

**Ansprüche**

1. Verfahren zum Herstellen von Polyvinylidenfluoridkopolymeren durch Aufpfropfen eines Monomers auf das Polyvinylidenfluorid mittels ionisierender Strahlung, dadurch gekennzeichnet, daß es folgende, sukzessive Verfahrensschritte aufweist:

a) - ein Pulver oder einen Film aus Polyvinylidenfluorid oder aus vinylidenfluoridkopolymer mit wenigstens 95% Vinylidenfluorid in eine Lösung aus einem Monomer einzutauchen, das aus der aus Acrylamid, Styren, Methylstyren, Allylglycidyläther, Vinyl-2-Pyridin, vinyl-4-Pyridin, Methyl-2-Vinyl-5-Pyridin, den Dimethylaminoäthylacrylaten und-methacrylaten, den Dimethylaminopropylacrylaten und -methacrylaten, den Diäthylaminoäthylacrylaten und -methacrylaten, den Diäthylaminopropylacrylaten und -methacrylaten, dem Dimethylaminopropylmethacrylamid, dem N-Vinylpyrrilidon, dem n-Vinylcaprolacton, den Azyloxy- und Hydroxystyrenen, der schwefligen vinylsäure, der Acrylsäure und der Methacrylsäure bestehenden Gruppe ausgewählt wird, um das Pulver oder den Film aus Vinylidenpolyfluorid mit dem Monomer zu imprägnieren;

b) - das imprägnierte Pulver oder den Film mit ionisierenden Strahlen in der Abwesenheit von Sauerstoff derart zu bestrahlen, daß die integrierte, angewandte Strahlungsdosis 500 Gy bis 10 kGy (50 krad bis 1 Mrad) beträgt, und falls das aufgesetzte Monomer keinen ionischen Charakter besitzt

c) - anschließend das aufgesetzt, erhaltene Kopolymer einer chemischen Reaktion zu unterwerfen, um ihm einen ionischen Charakter zu geben.

2. Verfahren nach Anspruch 1, dadurch gekennzeichnet, daß man das imprägnierte Pulver oder den Film von der Lösung vor der Durchführung des Bestrahlungsschrittes b) trennt.

3. Verfahren zum Herstellen von Polyvinylidenfluoridkopolymeren durch Aufpfropfen eines Monomers auf das Polyvinylidenfluorids mittels ionisierender Strahlung, dadurch gekennzeichnet, daß es folgende, sukzessive Verfahrensschritte aufweist:

a) - eine Lösung in einem Lösungsmittel herzustellen aus Polyvinylidenfluorid oder aus Vinylidenfluoridkopolymer mit wenigstens 95% Vinylidenfluorid und aus einem Monomer, das aus der aus Acrylamid, Styren, Methylstyren, Allylglycidyläther, Vinyl-2-Pyridin, Vinyl-4-Pyridin, Methyl-2-Vinyl-5-Pyridin, den Dimethylaminoäthylacrylaten und-methacrylaten,den Dimethylaminopropylacrylaten und -methacrylaten, den Diäthylaminoäthylacrylaten und -methacrylaten, den Diäthylaminopropylacrylaten und -methacrylaten, dem Dimethylaminopropylmethacrylamid, dem N-Vinylpyrrilidon, dem n-Vinylcaprolacton, den Azyloxy- und Hydroxystyrenen, der schwefligen Vinylsäure, der Acrylsäure und der Methacrylsäure bestehenden Gruppe ausgewählt wird,

b) - die erhaltene Lösung mit ionisierenden Strahlen in der Abwesenheit von Sauerstoff derart zu bestrahlen, daß die integrierte, angewandte Strahlungsdosis 500 Gy bis 10 kGy (50 krad bis 1 Mrad) beträgt,

c) - einen Film aus aufgesetztem Kopolymer aus der bestrahlten Lösung durch Verdampfen des Lösungsmittels und durch Entfernen gebildeter Homopolymere und des restlichen Monomers herzustellen, und

d) - anschließend den Film aus dem erhaltenen, aufgesetzten Kopolymer einer chemischen Reaktion auszusetzen, um ihm einen ionischen Charakter zu geben, falls das aufgesetzte Monomer keinen ionischen Charakter besitzt.

4. Verfahren zum Herstellen von Polyvinylidenfluoridkopolymeren durch Aufpfropfen eines Monomers auf das Polyvinylidenfluorids mittels ionisierender Strahlung, dadurch gekennzeichnet, daß es folgende, sukzessive Verfahrensschritte aufweist:

a) - eine Lösung in einem Lösungsmittel herzustellen aus Polyvinylidenfluorid oder aus Vinylidenfluoridkopolymer mit wenigstens 95% Vinylidenfluorid und aus einem Monomer, das aus der aus Acrylamid, Styren, Methylstyren, Allylglycidyläther, Vinyl-2-Pyridin, Vinyl-4-Pyridin, Methyl-2-Vinyl-5-Pyridin, den Dimethylaminoäthylacrylaten und-methacrylaten, den Dimethylaminopropylarcrylaten und -methacrylaten, den Diäthylaminoäthylacrylaten und -methacrylaten, den Diäthylaminopropylacrylaten und -methacrylaten, dem Dimethylaminopropylmethacrylamid, dem N-Vinylpyrrilidon, dem n-Vinylcaprolacton, den Azyloxy- und Hydroxystyrenen, der schwefligen Vinylsäure, der Acrylsaure und der Methacrylsäure bestehenden Gruppe ausgewählt wird,

b) - aus der Lösung durch Verdampfen des Lösungsmittels einen Film herzustellen,

c) - den so erhaltenen Film mit ionisierenden Strahlen in der Abwesenheit von Sauerstoff derart zu bestrahlen, daß die integrierte, angewandte Strahlungsdosis 500 Gy bis 10 kGy (50 krad bis 1 Mrad) beträgt und

d - anschließend den Film aus dem erhal- tenen aufgesetzten Kopolymer einer chemi- schen Reaktion auszusetzen, um ihm einen ionischen Charakter zu geben, falls das aufgesetzte Monomer keinen ionischen Charakter besitzt.

5. Verfahren nach einem der Ansprüche 1 bis 4, dadurch gekennzeichnet, daß die chemische Reaktion aus einer Quaternisierung oder einer Sulfurierung besteht.

6. Verfahren nach einem der Ansprüche 1 und 2, dadurch gekennzeichnet, daß man den Imprägnierungsschritt a) des Pulvers oder des Films aus Polyvinylidenfluorid bei Raumtemperatur während einer Dauer von wenigstens 24 Stunden durchführt.

7. Verfahren nach einem der Ansprüche 1, 2 und 6, dadurch gekennzeichnet, daß das Monomer in einer Mischung aus Wasser und einem organischen Lösungsmittel gelöst ist.

8. Verfahren nach Anspruch 7, dadurch gekennzeichnet, daß das organische Lösungsmittel ein Keton oder Dimethylformanid ist.

9. Membran aus aufgesetztem Polyvinylidenfluorid, die durch Ausführen des Verfahrens nach einem der Ansprüche 1 bis 8 erhalten wird, dadurch gekennzeichnet, daß sie eine Dicke von 50 bis 100 um und einen spezifischen elektrischen Oberflächenwiderstand in einer 1N-NaCl-Umgebung von deutlich unter 5 $\Omega cm^2$ aufweist.

10. Membran nach Anspruch 9, dadurch gekennzeichnet, daß sie aus mit Dimethylaminoäthylmethacrylat oder mit sulfurierten Styren aufge- setztem Polyvinylidenfluorid besteht.